# EUROPEAN PATENT APPLICATION

(11) **EP 4 783 016 A1**
(43) Date of publication of application: **29.07.2026**
(21) Application number: 24930316.5
(22) Date of filing: 30.07.2024
(51) Int. Cl.: G06F 13/12

(54) **IDENTIFICATION CIRCUIT AND IDENTIFICATION METHOD FOR USB HOST AND USB DEVICE, AND USB CHIP**

(30) Priority: 21.03.2024 CN 202410330399
(71) Applicant: Nanjing Qinheng Microelectronics Co., Ltd., Yuhuatai District Nanjing, Jiangsu 210012 (CN)
(72) Inventor: WANG, Chunhua, Nanjing, Jiangsu 210012 (CN)
(74) Representative: Murgitroyd & Company
(86) International application number: PCT/CN2024/108588
(87) International publication number: WO 2025/194652

(57) **Abstract**

Disclosed are a recognition circuit of USB host and device, and a recognition method thereof, and a USB chip. The recognition circuit comprises a control unit; a USB transceiver, which comprises a first single-ended receiver, a second single-ended receiver, a DP pin and a DM pin; a first weakly driven source voltage output unit, which has an output end connected with the DP pin; and a first voltage comparator, which has an input end connected with the DP pin and an output end connected with the control unit. According to the invention, a connection state of a USB port can be detected, parameter requirements of a USB specification can be met, and the USB port can be continuously monitored online in a non-communication period, thereby achieving non-inductive silent detection, accurate recognition and good compatibility.

## Description

### TECHNICAL FIELD

The present invention relates to a USB communication technology, and particularly to a recognition circuit of USB host and device, and a recognition method thereof, and a USB chip.

### BACKGROUND

USB communication usually adopts a point-to-point master-slave communication mode, and one device serves as a USB host and the other device serves as a USB device which is equivalent to a slave.

Some microcontrollers (MCU) only have one USB transceiver (PHY) and only support one USB port, which may optionally work in a USB host or device mode by writing a register.

By inserting a USB HUB device, one USB host may communicate with multiple USB devices, and in this case, an upstream port of the HUB imitates the USB device to connect with the USB host, and each of multiple downstream ports of the HUB imitates the USB host to connect with one USB device. Usually, working modes of the upstream port and each downstream port of the HUB are fixed, but in some specific application scenarios where a mobile device is connected with a computer, the HUB may need to exchange functions of the upstream port and a certain downstream port.

Most USB devices are regularly USB devices or USB hosts, and some USB devices may support dynamic switching between host and device modes. The USB supports hot swapping, and the previously connected USB device may be disconnected for replacement with the USB host. In order to facilitate the USB device to automatically switch between the host and the device according to a type of the device connected with the USB port, or inform the microcontroller to write a register selection mode, it is necessary to recognize the type of the device connected with the USB port.

The prior arts, such as CN 106104504 B and CN 112041827 B, provide a recognition method for USB host and device, wherein, in a process of trying to detect the USB host, level states of DP and DM pins are detected by disabling corresponding resistors and enabling corresponding current sources, the DP and DM pins may constantly appear high levels during detection, and in this case, the USB device is not plugged in. This situation does not meet requirements of a USB specification, and belongs to an invasive detection and recognition method, which is not conducive to the compatibility of the USB port. Moreover, because this technical solution produces a pin level state failed to meet the definition of the USB specification, the USB port cannot be continuously monitored online, and needs to be shut down in time according to the situation to avoid affecting normal USB communication.

### SUMMARY

Objective of the present invention: in order to solve the problem that a USB port cannot detect and recognize a host or a device silently in the prior art, the present invention provides a recognition circuit of USB host and device, and a recognition method thereof, and a USB chip.

Technical solution: a recognition circuit of USB host and device comprises:
a control unit;
a USB transceiver, which comprises a first single-ended receiver, a second single-ended receiver, a DP pin and a DM pin, wherein input ends of the first single-ended receiver and the second single-ended receiver are connected with a DP pin and a DM pin respectively, and output ends of the first single-ended receiver and the second single-ended receiver are both connected with the control unit;
a first weakly driven source voltage output unit, which has an output end connected with the DP pin; and
a first voltage comparator, which has an input end connected with the DP pin and an output end connected with the control unit;
wherein, when a no-load output voltage of the first weakly driven source voltage output unit is V₁, a reference voltage of the first voltage comparator is V_{ref1}, and a low-level threshold voltage of the first single-ended receiver is Vₜₕ₁, V_{ref1}<V₁<Vₜₕ₁.

Further, the recognition circuit of the USB host and device further comprises a second weakly driven source voltage output unit and a second voltage comparator, wherein an output end of the second weakly driven source voltage output unit and an input end of the second voltage comparator are both connected with the DM pin, and an output end of the second voltage comparator is connected with the control unit, wherein, when a no-load output voltage of the second weakly driven source voltage output unit is V₂, a reference voltage of the second voltage comparator is V_{ref2}, and a low-level threshold voltage of the second single-ended receiver is Vₜₕ₂, V_{ref2}<V₂<Vₜₕ₂.

Further, the recognition circuit of the USB host and device further comprises a weak pull-down circuit, wherein the weak pull-down circuit is connected with the DM pin, and the weak pull-down circuit is a pull-down resistor or a pull-down current.

Further, V₁-V_{ref1}≥0.1 V.

Further, a source current output capability of the first weakly driven source voltage output unit ranges from 2 uA to 20 uA.

Further, the first weakly driven source voltage output unit comprises a voltage source and a current limiting module, and the voltage source and the current limiting module are connected in series; or the first weakly driven source voltage output unit comprises a high-side resistor and a low-side resistor, the high-side resistor and the low-side resistor are connected in series, the high-side resistor is connected with a power supply, the low-side resistor is connected with the ground, and a resistance value of the low-side resistor ranges from 30 KΩ to 300 KΩ.

Further, the control unit is a USB HUB controller or a USB controller, and is configured for judging a connection state of a USB port according to an output signal of the single-ended receiver and an output signal of the first voltage comparator.

A USB chip comprises the recognition circuit of the USB host and device above, and the USB controller, wherein the control unit is connected with the USB controller, or the USB controller comprises the control unit.

A recognition method for the recognition circuit of the USB host and device above comprises the following steps of:
when the output signal of the first voltage comparator is high-level, and the output signal of the first single-ended receiver is low-level, judging that the USB port is in an Idle state;
when the output signal of the first voltage comparator and the output signal of the first single-ended receiver are both low-level, judging that the USB port is connected to the USB host; and
when the output signal of the first voltage comparator and the output signal of the first single-ended receiver are both high-level, judging that the USB port is connected to a non-low-speed USB device.

Further, the recognition method further comprises:
when the output signal of the first single-ended receiver is low-level, and the output signal of the second single-ended receiver is high-level, judging that the USB port is connected to a low-speed USB device.

Compared with the prior art, the present invention provides the recognition circuit of the USB host and device, and the recognition method thereof, and the USB chip, and has the following beneficial effects: a connection state of the USB port can be detected, comprising detecting whether there is an apparatus connected and judging whether the apparatus connected is the USB host or the USB device, parameter requirements of a USB specification can be met, and the USB port can be continuously monitored online in a non-communication period, thereby achieving non-inductive silent detection, accurate recognition and good compatibility.

### BRIEF DESCRIPTION OF THE DRAWINGS

FIG. 1 is a schematic structural diagram of a recognition circuit of USB host and device in First Embodiment;
FIG. 2 is a schematic diagram of a structure of a weakly driven source voltage output unit;
FIG. 3 is a schematic diagram of a second structure of the weakly driven source voltage output unit;
FIG. 4 is a schematic diagram of a third structure of the weakly driven source voltage output unit;
FIG. 5 is a schematic diagram of connection of a DM pin in Second Embodiment; and
FIG. 6 is another schematic diagram of connection of the DM pin in Second Embodiment.

### DETAILED DESCRIPTION

The present invention is further explained and described hereinafter with reference to the drawings and specific embodiments.

### First Embodiment

A recognition circuit of USB host and device comprises a control unit, a USB transceiver, a first weakly driven source voltage output unit and a first voltage comparator.

The USB transceiver comprises a first single-ended receiver, a second single-ended receiver, a DP pin and a DM pin, wherein an input end of the first single-ended receiver is connected with the DP pin, an input end of the second single-ended receiver is connected with the DM pin, and the single-ended receiver can detect and output logic levels of the DP and DM pins.

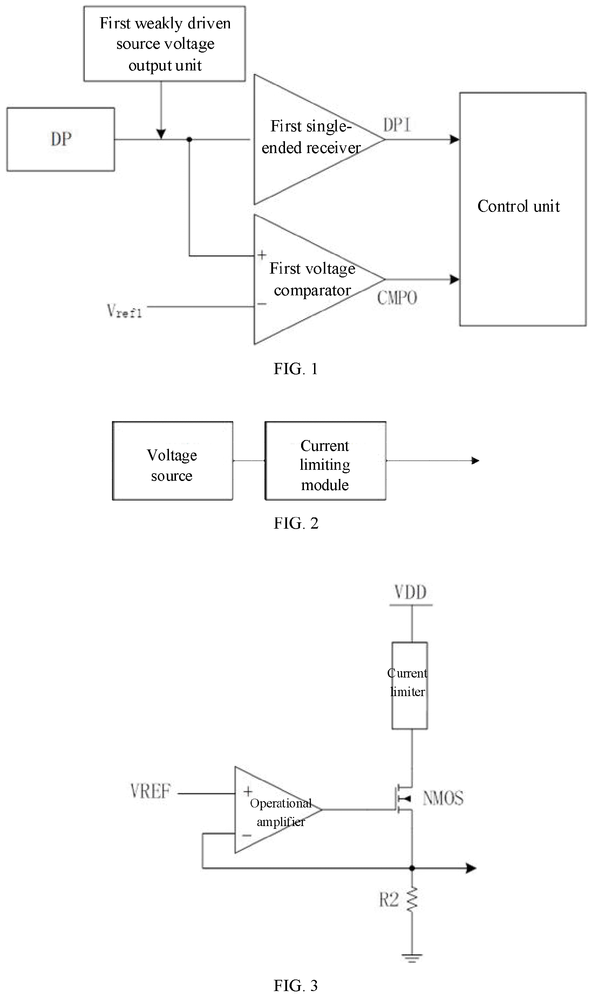

As shown in FIG. 1, the first weakly driven source voltage output unit has an output end connected with the DP pin.

As shown in FIG. 1, the first voltage comparator has an input end connected with the DP pin and an output end connected with the control unit.

When a no-load output voltage of the first weakly driven source voltage output unit is V₁, a reference voltage of the first voltage comparator is V_{ref1}, and a low-level threshold voltage of the first single-ended receiver is Vₜₕ₁, theoretically, V_{ref1}<V₁<Vₜₕ₁. Actually, a reference voltage of the first voltage comparator is at least 0.1 V lower than the no-load output voltage of the first weakly driven source voltage output unit, so that the comparator can recognize a no-load state of the DP pin. Values of the voltages may be as follows: 0.15 V≤V_{ref1}≤0.55 V, and 0.3 V≤V₁≤0.75 V. A source current output capability of the first weakly driven source voltage output unit ranges from 2 uA to 20 uA. For example, in this embodiment, preferably, the V_{ref1} is 0.35 V, the V₁ is 0.6 V, and the source current output capability is 8 uA, which is equivalent to a maximum driving current of the source voltage output unit.

The control unit is configured for judging a connection state of a USB port according to an output signal DPI of the single-ended receiver and an output signal CMPO of the first voltage comparator. The control unit is a USB HUB controller or a USB controller.

Specifically, in terms of a circuit structure, the first weakly driven source voltage output unit may have various structures, usually comprising a voltage source and a current limiting module. As shown in FIG. 2, the voltage source and the current limiting module are connected in series.

As shown in FIG. 3, the first weakly driven source voltage output unit comprises a reference voltage, the current limiting module, a source follower module composed of an operational amplifier and a NMOS, and a pull-down module. The reference voltage is preferably 0.6 V, the current limiting module may be achieved by a constant current mirror of about 8 uA, and the pull-down module may adopt a pull-down resistor of about 400 KΩ or a pull-down current of about 2 uA. An output of the DP is 0.6 V in the case of no load, and after the USB host has a pull-down resistor of 15 KΩ connected to the DP pin, a voltage of the DP pin is reduced by about 0.1 V, which is lower than the reference voltage V_{ref1} of the first voltage comparator.

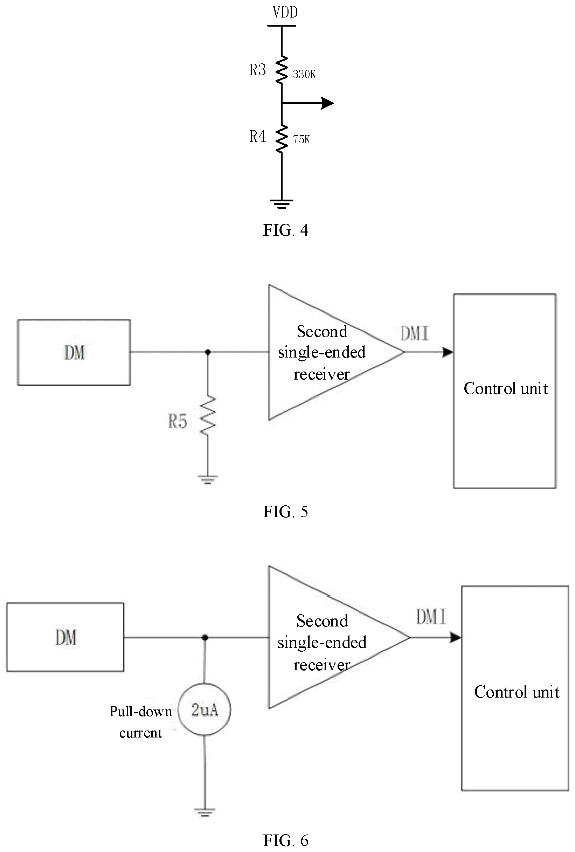

As shown in FIG. 4, the first weakly driven source voltage output unit may also have another simplified structure. The first weakly driven source voltage output unit comprises a high-side resistor and a low-side resistor, and the high-side resistor and the low-side resistor are connected in series. The other end of the high-side resistor is connected with a USB standard power supply of 3.3 V, and if this end is connected with a power supply of 5 V, it is necessary to recalculate a resistance value in proportion; and the other end of the low-side resistor is connected with the ground (0 V), and a resistance value of the low-side resistor ranges from 30 KΩ to 300 KΩ. Divided voltages of the two resistors are preferably 0.6 V, the resistance value of the low-side resistor may be 75 KΩ, and the resistance value of the high-side resistor may be 330 KΩ. The output of the DP is 0.6 V in the case of no load, and after the USB host has the pull-down resistor of 15 KΩ connected to the DP pin, the voltage of the DP pin is reduced by about 0.12 V, which is lower than the reference voltage V_{ref1} of the first voltage comparator.

A USB chip comprises the recognition circuit of the USB host and device above. The USB chip further comprises the USB controller, wherein the control unit is connected with the USB controller. In addition, the control unit may be incorporated into the USB controller.

According to a recognition method utilizing the recognition circuit of the USB host and device above, the control unit judges whether the USB port is idle, connected with a host or connected with a non-low-speed device according to the output signal DPI of the single-ended receiver and the output signal CMPO of the first voltage comparator. The recognition method specifically comprises the following steps of:
when the output signal of the first voltage comparator is high-level, and the output signal of the first single-ended receiver is low-level, judging that the USB port is in an Idle state;
when the output signal of the first voltage comparator and the output signal of the first single-ended receiver are both low-level, judging that the USB port is connected to the USB host; and
when the output signal of the first voltage comparator and the output signal of the first single-ended receiver are both high-level, judging that the USB port is connected to a non-low-speed USB device.

A working principle is as follows and refers to the table below:

| CMPO | DPI | DMI | Judgment result |
|---|---|---|---|
| 1 | 0 | 0 | Idle |
| 0 | 0 | 0 | Connection with host |
| 1 | 1 | 0 | Connection with non-low-speed device |

In the Idle state, the voltage of the DP pin is equivalent to the no-load output voltage V₁ (0.6 V) of the first weakly driven source voltage output unit, which conforms to the USB specification. This voltage is lower than the low-level threshold voltage Vₜₕ₁ of the single-ended receiver of the USB, but higher than the reference voltage V_{ref1} of the voltage comparator, so that the DPI is low-level (0) and the CMPO is high-level (1), which corresponds to the Idle state.

When the USB host is connected to the USB port, the pull-down resistor of about 15 KΩ carried by the DP pin of the USB host is also connected to the DP pin of the circuit. Because the source current output capability of the first weakly driven source voltage output unit is limited, it is 8 uA in this embodiment, so that the voltage of the DP pin is reduced to 0.12 V, which is lower than the reference voltage V_{ref1} of the first voltage comparator. Therefore, the DPI is 0 and the CMPO is 0, and in this case, it can be judged that the USB host is connected.

When the non-low-speed USB device, such as a full-speed or high-speed device, is connected to the USB port, the pull-up resistor of about 1.5 KΩ carried by the DP pin of the USB device is also connected to the DP pin, which causes an increase of the voltage of the DP pin to more than 2 V, so that the voltage is higher than the high-level threshold voltage Vₜₕ₁ of the single-ended receiver of the USB and higher than the reference voltage V_{ref1} of the first voltage comparator. Therefore, the DPI is 1 and the CMPO is 1, and in this case, it can be judged that the non-low-speed USB device is connected.

In practical application, anti-interference measures, such as re-inspection and filtration, may also be added as needed to avoid carrying out detection and recognition again in a communication transmission process, and the judgment is made by combining with a connection state provided by a high-speed USB or SuperSpeed USB transceiver.

### Second Embodiment

On the basis of First Embodiment, in Second Embodiment, a weak pull-down circuit is added on the DM pin, which can support connection monitoring of the low-speed USB device. As shown in FIG. 5, the weak pull-down circuit may be a weak pull-down resistor, a value of which generally ranges from 200 KΩ to 1000 KΩ, for example, the weak pull-down circuit is a weak pull-down resistor of 400 kΩ. As shown in FIG. 6, the weak pull-down circuit may also be a weak pull-down current, a value of which generally ranges from 1 uA to 5 uA, for example, the weak pull-down circuit is a pull-down current of about 2 uA.

When the low-speed USB device is connected to the USB port, the pull-up resistor of about 1.5 KΩ carried by the DM pin of the low-speed USB device is also connected to the DM pin, which causes an increase of the voltage of the DM pin to more than 2 V, so that the voltage is higher than the high-level threshold voltage of the single-ended receiver of the USB. Therefore, the DMI is high-level, but the DPI is low-level, and it can be judged that the low-speed USB device is connected.

In this case, the control unit obtains the connection state of the USB port and the type of the connection device according to the values of the CMPO, the DPI and the DMI, as shown in the table below.

| CMPO | DPI | DMI | Judgment result |
|---|---|---|---|
| 1 | 0 | 0 | Idle |
| 0 | 0 | 0 | Connection with host |
| 1 | 1 | 0 | Connection with non-low-speed device |
| X | 0 | 1 | Connection with low-speed device |

In this embodiment, the connection detection of the low-speed USB device is additionally supported. If it is not necessary to support the connection of the low-speed USB device in some scenarios, the weak pull-down module may be omitted, and the solution of First Embodiment is selected.

### Third Embodiment

Compared with First Embodiment, in Third Embodiment, not only the first weakly driven source voltage output unit and the first voltage comparator are arranged on the DP pin, but also a second weakly driven source voltage output unit and a second voltage comparator are arranged on the DM pin. In this embodiment, there is no weak pull-down circuit on the DM pin.

The connection is similar to that in First Embodiment. An output end of the second weakly driven source voltage output unit and an input end of the second voltage comparator are both connected with the DM pin, and an output end of the second voltage comparator is connected with the control unit, wherein, when a no-load output voltage of the second weakly driven source voltage output unit is V₂, a reference voltage of the second voltage comparator is V_{ref2}, and a low-level threshold voltage of the second single-ended receiver is Vₜₕ₂, V_{ref2}<V₂<Vₜₕ₂. The V₂ may be the same as the V₁, the V_{ref2} may be the same as the V_{ref1}, and the Vₜₕ₂ may be the same as or different from the Vₜₕ₁.

This embodiment may be used to detect the disconnection of the connected USB host online after entering a USB device mode, and to detect the connection of the low-speed USB device with reference to a detection principle of the DP pin.

## Claims

1. A recognition circuit of USB host and device, comprising:
a control unit;
a USB transceiver, which comprises a first single-ended receiver, a second single-ended receiver, a DP pin and a DM pin, wherein input ends of the first single-ended receiver and the second single-ended receiver are connected with a DP pin and a DM pin respectively, and output ends of the first single-ended receiver and the second single-ended receiver are both connected with the control unit;
a first weakly driven source voltage output unit, which has an output end connected with the DP pin; and
a first voltage comparator, which has an input end connected with the DP pin and an output end connected with the control unit;
wherein, when a no-load output voltage of the first weakly driven source voltage output unit is V₁, a reference voltage of the first voltage comparator is V_{ref1}, and a low-level threshold voltage of the first single-ended receiver is Vₜₕ₁, V_{ref1}<V₁<Vₜₕ₁.

2. The recognition circuit of the USB host and device according to claim 1, further comprising a second weakly driven source voltage output unit and a second voltage comparator, wherein an output end of the second weakly driven source voltage output unit and an input end of the second voltage comparator are both connected with the DM pin, and an output end of the second voltage comparator is connected with the control unit, wherein, when a no-load output voltage of the second weakly driven source voltage output unit is V₂, a reference voltage of the second voltage comparator is V_{ref2}, and a low-level threshold voltage of the second single-ended receiver is Vₜₕ₂, V_{ref2}<V₂<Vₜₕ₂.

3. The recognition circuit of the USB host and device according to claim 1, further comprising a weak pull-down circuit, wherein the weak pull-down circuit is connected with the DM pin, and the weak pull-down circuit is a pull-down resistor or a pull-down current.

4. The recognition circuit of the USB host and device according to any one of claims 1 to 3, wherein V₁-V_{ref1}≥0.1 V.

5. The recognition circuit of the USB host and device according to any one of claims 1 to 3, wherein a source current output capability of the first weakly driven source voltage output unit ranges from 2 uA to 20 uA.

6. The recognition circuit of the USB host and device according to any one of claims 1 to 3, wherein the first weakly driven source voltage output unit comprises a voltage source and a current limiting module, and the voltage source and the current limiting module are connected in series; or the first weakly driven source voltage output unit comprises a high-side resistor and a low-side resistor, the high-side resistor and the low-side resistor are connected in series, the high-side resistor is connected with a power supply, the low-side resistor is connected with the ground, and a resistance value of the low-side resistor ranges from 30 KΩ to 300 KΩ.

7. The recognition circuit of the USB host and device according to any one of claims 1 to 3, wherein the control unit is a USB HUB controller or a USB controller, and is configured for judging a connection state of a USB port according to an output signal of the single-ended receiver and an output signal of the first voltage comparator.

8. A USB chip, comprising the recognition circuit of the USB host and device according to any one of claims 1 to 7, and the USB controller, wherein the control unit is connected with the USB controller, or the USB controller comprises the control unit.

9. A recognition method utilizing the recognition circuit of the USB host and device according to any one of claims 1 to 7, comprising the following steps of:
when the output signal of the first voltage comparator is high-level, and the output signal of the first single-ended receiver is low-level, judging that the USB port is in an Idle state;
when the output signal of the first voltage comparator and the output signal of the first single-ended receiver are both low-level, judging that the USB port is connected to the USB host; and
when the output signal of the first voltage comparator and the output signal of the first single-ended receiver are both high-level, judging that the USB port is connected to a non-low-speed USB device.

10. The recognition method according to claim 9, further comprising:
when the output signal of the first single-ended receiver is low-level, and the output signal of the second single-ended receiver is high-level, judging that the USB port is connected to a low-speed USB device.
